# EUROPÄISCHE PATENTSCHRIFT

(11) **EP 4 752 526 B1**
(45) Veröffentlichungstag und Bekanntmachung des Hinweises auf die Patenterteilung: **14.10.2026**
(21) Anmeldenummer: 24216485.3
(22) Anmeldetag: 29.11.2024
(51) Int. Cl.: G01N 15/0205, G01N 15/075, G01N 15/1433, G01N 15/1404, G01N 15/14

(54) **VORRICHTUNG SOWIE VERFAHREN ZUM ERMITTELN VON EIGENSCHAFTEN VON PARTIKELN IN EINEM FLUID**
DEVICE AND METHOD FOR DETERMINING PROPERTIES OF PARTICLES IN A FLUID
DISPOSITIF ET PROCÉDÉ DE DÉTERMINATION DE PROPRIÉTÉS DE PARTICULES DANS UN FLUIDE

(43) Veröffentlichungstag der Anmeldung: 03.06.2026
(73) Patentinhaber: SICK AG, 79183 Waldkirch (DE); Endress+Hauser SICK GmbH+Co. KG, 01458 Ottendorf-Okrilla (DE)
(72) Erfinder: Müller, Romain, 79252 Stegen (DE); Strohmeier, Dirk, 79312 Emmendingen (DE); Reichert, Andreas, 79241 Ihringen (DE); Jahn, Dominik, 01640 Coswig (DE); Künzelmann, Mario, 01187 Dresden (DE)
(74) Vertreter: Manitz Finsterwald Patent- und Rechtsanwaltspartnerschaft mbB

(56) Entgegenhaltungen:
- US-A1- 2018 161 531
- US-A1- 2021 190 671
- BIRZER CRISTIAN H ET AL: "Renormalisation of particle distributions in an initially-biased turbulent jet by swirl and radial injection", INTERNATIONAL JOURNAL OF MULTIPHASE FLOW, ELSEVIER, AMSTERDAM, NL, vol. 135, 10 November 2020 (2020-11-10), XP086443086, ISSN: 0301-9322, [retrieved on 20201110], DOI: 10.1016/J.IJMULTIPHASEFLOW.2020.103509
- YAN FEI ET AL: "Particle motion characteristics on the rotational flow pneumatic conveying of horizontal-vertical pipeline", CHEMICAL ENGINEERING RESEARCH AND DESIGN, ELSEVIER, AMSTERDAM, NL, vol. 210, 12 September 2024 (2024-09-12), pages 452 - 468, XP087624564, ISSN: 0263-8762, [retrieved on 20240912], DOI: 10.1016/J.CHERD.2024.09.010

## Beschreibung

Die Erfindung betrifft eine Vorrichtung zum Ermitteln von Eigenschaften von Partikeln in einem Fluid. Ferner betrifft die Erfindung ein Verfahren zum Ermitteln von Eigenschaften von Partikeln in einem Fluid.

In der modernen Technik, insbesondere beispielsweise in der Prozessautomatisierung, ist eine Ermittlung von Eigenschaften von Partikeln in einem Fluid oftmals wünschenswert, insbesondere da anhand der ermittelten Eigenschaften der jeweilige Prozess adaptiert werden kann beziehungsweise sogar für ein optimales Ergebnis werden muss. Ein großes Spektrum an Anwendungsgebieten kann hierfür genannt werden, beispielsweise bei der Herstellung von Zement, da eine Größenverteilung der Zementpartikel eine Stabilität und Aushärteeigenschaften beeinflusst, über Arzneimittelherstellung, da eine Wirkung von Wirkstoffen von einer Größe der Partikel oder einer Partikeldichte abhängen kann, bis hin zur Herstellung von Lebensmitteln, da zum Beispiel bei gemahlenem Kaffee eine über den Mahlgrad einstellbare Größe der Kaffeepartikel eine erreichbare Dichte beim Verpacken und insbesondere auch den Geschmack des aufgebrühten Kaffees beeinflusst.

Vorrichtungen, die ein Ermitteln von Eigenschaften von Partikeln in einem Fluid ermöglichen, sind grundsätzlich bekannt, siehe beispielsweise US 2021/190671 A1; "Renormalisation of particle distributions in an initially-biased turbulent jet by swirl and radial injection" (Birzer Cristian H. et al., International Journal of multiphase Flow, 2020), "Particle motion characteristics on the rotational flow pneumatic conveying of horizontal-vertical pipeline" (Yan Fei et al., Chemical Engineerign Reserach and Design, 2024), oder US 2018/161531 A1.

Grundsätzlich kann beispielsweise eine Größenverteilung der Partikel im Fluid durch eine Siebung mit mehreren Sieben unterschiedlicher Maschenweite ermittelt werden. Ferner kann eine Probe des Fluids in ein Messvolumen gefüllt werden, in das Licht, insbesondere Laserlicht, eingestrahlt wird. Durch einen entsprechenden Sensor können dann eine Transmission oder Streulicht gemessen werden. Durch diese Messungen wird dann integrativ ein Verschmutzungsgrad des Fluids, und damit eine Information über die Partikelgröße beziehungsweise -dichte, ermittelt, da sowohl Transmission als auch Streuung von diesen Größen, neben optischen Eigenschaften wie Brechung oder Absorption, abhängt. Auch kann das Fluid mit den enthaltenen Partikeln durch eine Matrix- oder Zeilenkamera abgelichtet werden, wobei durch nachgeschaltete Bildverarbeitung Größe und Form einzelner Partikel bestimmt werden kann.

Für diese Messung wird zumeist eine Menge an Fluid mit den Partikeln als repräsentative Probe entnommen. Es hat sich hierbei jedoch bei bekannten Vorrichtungen als nachteilig herausgestellt, dass diese Entnahme für jede Applikation neu abgestimmt werden muss, da je nach Applikationen unterschiedliche Randbedingungen herrschen, beispielsweise hinsichtlich des eingesetzten Fluids oder der Eigenschaften der Partikel. Da eine für eine Applikation geeignete Entnahme für eine andere Applikation oftmals nicht verwendbar ist, stellt dies einen hohen Vorbereitungsaufwand dar, durch den Kosten verursacht werden und der darüber hinaus zeitintensiv ist.

Es ist Aufgabe der vorliegenden Erfindung, den vorab beschriebenen Stand der Technik zu verbessern. Insbesondere ist es Aufgabe der Erfindung, eine Vorrichtung sowie ein Verfahren zum Ermitteln von Eigenschaften von Partikeln in einem Fluid bereitzustellen, durch die ein Ermitteln der Eigenschaften der Partikel im Fluid in Echtzeit ermöglicht ist, wobei ein Einsatz der erfindungsgemäßen Vorrichtung beziehungsweise des erfindungsgemäßen Verfahrens nicht oder nur unwesentlich von dem jeweiligen Materialien, hinsichtlich des Fluids und/oder der Partikel, abhängt.

Die Aufgabe wird erfindungsgemäß durch die unabhängigen Ansprüche gelöst. Insbesondere wird die Aufgabe in einem ersten Aspekt der Erfindung durch eine Vorrichtung gemäß dem unabhängigen Anspruch 1 sowie in einem zweiten Aspekt der Erfindung durch ein Verfahren gemäß Anspruch 15 gelöst.

Weiterentwicklungen der erfindungsgemäßen Vorrichtung sowie des erfindungsgemäßen Verfahrens ergeben sich aus den Unteransprüchen, der Beschreibung und den Zeichnungen. Dabei gelten Merkmale und Vorteile, die in Bezug auf die erfindungsgemäße Vorrichtung gemäß des ersten Aspekts der Erfindung beschrieben sind auch für das erfindungsgemäße Verfahren gemäß dem zweiten Aspekt der Erfindung und jeweils umgekehrt.

Gemäß einem ersten Aspekt der Erfindung wird die Aufgabe gelöst durch eine Vorrichtung zum Ermitteln von Eigenschaften von Partikeln in einem Fluid, die Vorrichtung aufweisend ein Leitungselement mit einem von einer Leitungswandung umschlossenen Leitungsvolumen zum Leiten des Fluids im Leitungsvolumen entlang einer Flussrichtung, ein Beleuchtungssystem mit zumindest einer Lichtquelle, ein Kamerasystem mit zumindest einer Kameraeinheit sowie ein mit der zumindest einen Kameraeinheit datenkommunizierend verbundenen Auswerteeinheit.

Die erfindungsgemäße Vorrichtung ist dadurch gekennzeichnet, dass die Vorrichtung einen im Leitungselement angeordneten Drallgenerator aufweist, wobei der Drallgenerator zum Erzeugen einer Verwirbelung des Fluids zum Treiben der Partikel in Richtung der Leitungswandung und damit zum Bilden eines partikelangereicherten Fluids ausgebildet ist, wobei dieses partikelangereicherte Fluid mit in Richtung der Leitungswandung getriebenen Partikeln in Flussrichtung nach dem Drallgenerator einer Messzelle mit einem Zellenvolumen und einer, bevorzugt zumindest abschnittsweise transparenten, Zellenwandung zuführbar ist, wobei ferner das Beleuchtungssystem und das Kamerasystem derart bezüglich der Messzelle angeordnet sind, dass die zumindest eine Lichtquelle des Beleuchtungssystems zum zumindest teilweisen Ausleuchten der Messzelle und die zumindest eine Kameraeinheit des Kamerasystems zum Erstellen von Aufnahmen des ausgeleuchteten Bereichs der Messzelle ausgebildet sind, und wobei ferner das Auswertesystem zum Auswerten der Aufnahmen des Kamerasystems zum Ermitteln von Eigenschaften von Partikeln im Fluid ausgebildet ist.

Die erfindungsgemäße Vorrichtung ermöglicht das Ermitteln von Eigenschaften von Partikeln in einem Fluid. Das Fluid kann hierbei beispielsweise ein Gas oder eine Flüssigkeit sein. Eigenschaften der Partikel, die durch die erfindungsgemäße Vorrichtung ermittelt werden können umfassen beispielsweise eine Partikeldichte im Fluid, eine Größe und/oder Form der einzelnen Partikel oder eine Größenverteilung der Partikel. Diese Liste ist nicht abgeschlossen, so dass insbesondere auch weitere Eigenschaften bestimmbar sein können.

Das Fluid strömt durch ein Leitungselement der erfindungsgemäßen Vorrichtung. Dieses Leitungselement umfasst insbesondere ein Leitungsvolumen, in dem das Fluid enthalten ist, wobei das Leitungsvolumen umfänglich durch eine Leitungswandung umschlossen ist. Das Leitungsvolumen ist mit anderen Worten entlang der Flussrichtung des Fluids ausgerichtet beziehungsweise gibt durch seine Ausgestaltung diese Flussrichtung vor. Bevorzugt kann das Leitungselement beispielsweise als ein Rohr ausgebildet sein. Die Leitungswandung kann aus Materialien aufgebaut sein, die zum Leiten des zu erwartenden Fluids geeignet sind, zum Beispiel Kunststoff, Metall und/oder Glas. Das Leitungsvolumen kann prinzipiell einen beliebigen offenen Querschnitt aufweisen, wobei kreisförmige, ovale oder andere konvexe Querschnittformen bevorzugt sind. Das Leitungsvolumen weist einen Durchmesser auf, wobei bei nicht kreisförmigen Querschnitten als Durchmesser des Leitungsvolumens ein Durchmesser eines Kreises mit derselben Fläche wie der Querschnitt als Durchmesser des Leitungsvolumens verwendet wird.

Ein Beleuchtungssystem mit zumindest einer Lichtquelle, ein Kamerasystem mit zumindest einer, bevorzugt digitalen, Kameraeinheit, sowie eine mit der zumindest einen Kameraeinheit datenkommunizierenden Auswerteeinheit bilden die Hauptkomponenten der eigentlichen Messapparatur der erfindungsgemäßen Vorrichtung.

Insbesondere digitale Kameraeinheiten weisen Bildsensoren auf, die aus einzelnen Pixeln aufgebaut sind. Die Ortsauflösung der Kameraeinheit gibt an, wie groß das kleinste Objekt ist, und damit insbesondere die kleinste Partikelgröße ist, welches durch die Kameraeinheit noch detektiert werden kann. Die Ortsauflösung wird insbesondere durch eine Anzahl der Pixel des Bildsensors und ein Blickfeld der Kameraeinheit beeinflusst. So können beispielsweise durch denselben Bildsensor verbaut in einer Kameraeinheit mit engem, kleinen Blickfeld kleinere Partikel aufgelöst und damit erkannt werden, verbaut in einer Kameraeinheit mit weitem, großen Blickfeld hingegen nur größere Partikel. Umgekehrt ermöglicht bei gleichem Blickfeld der entsprechenden Kameraeinheit ein Bildsensor mit höherer Pixelanzahl eine Auflösung von kleineren Partikelgrößen als ein Bildsensor mit einer geringeren Anzahl an Pixeln.

Zusammen mit einer möglicherweise vorhandenen Tiefenschärfe, die durch eine Abbildungsoptik der jeweiligen Kameraeinheit bestimmbar beziehungsweise einstellbar ist, legt das Blickfeld ferner ein Integrationsvolumen fest, in dem die Kameraeinheit zum Erkennen von Partikeln im Fluid ausgebildet ist.

Das Beleuchtungssystem mit seiner zumindest einen Lichtquelle wird eingesetzt, um das Fluid und insbesondere die darin enthaltenen Partikel auszuleuchten. Auf diese Weise kann die Vorrichtung zum einen unabhängig von Umgebungslicht betrieben werden, und zum anderen insbesondere mit kontrollierbaren Lichtverhältnissen ausgestattet werden, wodurch eine Messgenauigkeit beim Ermitteln der Eigenschaften der Partikel erhöht werden kann. Als Lichtquelle können beispielsweise Leuchtröhren, LEDs oder Laserquellen verwendet werden.

Die zumindest eine Kameraeinheit des Kamerasystems dient zum Erstellen von Aufnahmen des Fluids und insbesondere der darin enthaltenen Partikel. Die Kameraeinheit kann beispielsweise einen CCD Bildsensor oder einen CMOS Bildsensor aufweisen. Als Kameraeinheiten sind sowohl monochrome Kameras als auch Kameras, die farbige Aufnahmen erstellen können, denkbar. Bevorzugt erstellt die zumindest eine Kameraeinheit des Kamerasystems eine zeitlich fortlaufende Reihe von Aufnahmen. Der zeitliche Abstand der einzelnen Aufnahmen kann hierbei dem jeweiligen Einsatz der erfindungsgemäßen Vorrichtung angepasst sein, beispielsweise abhängig von einer erwarteten Änderungsrate der Eigenschaften der Partikel im Fluid. Abstände von weniger als eine Sekunde bis hin zu Tagen oder gar Wochen sind denkbar.

Die durch das Kamerasystem erstellten Aufnahmen werden über die Datenkommunikation an die Auswerteeinheit geschickt und dort ausgewertet. Die datenkommunizierende Verbindung kann hierbei kabelgebunden oder kabellos realisiert sein. Die Auswerteeinheit kann beispielsweise als ein Rechner oder als ein speziell programmierter FPGA ausgebildet sein. Die Auswertung erfolgt bevorzugt in Echtzeit, das heißt in möglichst unmittelbarer zeitlicher Nähe zum Zeitpunkt der Erstellung der Aufnahme. Eine Auswertung im Sinne der Erfindung ist insbesondere ein Ermitteln der Eigenschaften der Partikel basierend auf den Aufnahmen des Kamerasystems. Durch die Auswertung von zeitlich aufeinander folgende Aufnahmen können Änderungen der ermittelten Eigenschaften der Partikel damit besonders zeitnah festgestellt werden.

Wesentlich für die erfindungsgemäße Vorrichtung ist, dass im Leitungselement ein Drallgenerator angeordnet ist. Bevorzugt füllt der Drallgenerator einen Querschnitt des Leitungsvolumens vollständig aus, so dass kein Fluid am Drallgenerator vorbeiströmen kann. Mit anderen Worten, der Drallgenerator liegt bevorzugt umlaufend vollständig an der Leitungswandung an. Durch den Drallgenerator wird eine Verwirbelung im Fluid erzeugt. Der Drallgenerator kann insbesondere als ein feststehendes Element, also ohne bewegliche Teile, ausgebildet sein. Bevorzugt ist diese Verwirbelung eine um die Flussrichtung rotierende Verwirbelung. Insbesondere bewirkt diese Verwirbelung, dass die im Fluid enthaltenen Partikel in Richtung der Leitungswandung getrieben werden. Mit anderen Worten, die Partikel, die vor dem Drallgenerator mehr oder weniger gleichmäßig über den Querschnitt des Leitungsvolumens verteilt sind, sind nach dem Drallgenerator an der Leitungswandung konzentriert.

Bevorzugt ist die vom Drallgenerator erzeugte Verwirbelung, also der Drall, derart ausgebildet, dass ein zentraler Bereich um eine Mittelachse des Leitungsvolumens im Wesentlichen frei von Partikel ist, und sich die Partikel am Rand des Leitungsvolumens, also an der Leitungswandung, konzentrieren. Beispielsweise können in den äußersten 10% des Leitungsvolumens mehr als 90% der Partikel konzentriert sein.

Weiter wird durch den Drallgenerator die Verwirbelung in jedem eingesetzten Fluid erzeugt. Das Fluid fließt vor dem Drallgenerator durch das Leitungselement, trifft auf den Drallgenerator und wird verwirbelt. Somit werden insbesondere in jedem Fluid die vorhandenen Partikel in Richtung der Leitungswandung getrieben und bildet dort speziell mit Partikeln angereichertes Fluid, im Folgenden mit partikelangereichertem Fluid bezeichnet. Somit ist die erfindungsgemäße Vorrichtung universell einsetzbar und muss nicht speziell auf die als Fluid beziehungsweise als Partikel verwendeten Materialien abgestimmt werden.

Dies wird in der erfindungsgemäßen Vorrichtung dahingehend ausgenutzt, dass eben dieses an der Leitungswandung bereitgestellte partikelangereicherte Fluid einer Messzelle zugeführt wird. Die Messzelle weist ein Zellenvolumen mit einer Zellenwandung auf. Diese Zellenwandung kann bevorzugt zumindest abschnittsweise transparent ausgebildet sein. In dieses Messvolumen wird nun das partikelangereicherte Fluid zugeführt. Die Messzelle ist dabei bevorzugt als Teil eines Leitungssystems ausgebildet, so dass das partikelangereicherte Fluid durch das Messvolumen hindurchströmen kann und sich nicht darin staut. Nach dem Messvolumen kann der partikelangereicherte Fluidstrom aus der Messzelle wieder in das restliche Fluid im Leitungselement eingeleitet werden. Alternativ sind auch eine anderweitige Verwendung oder eine Entsorgung denkbar.

Das partikelangereicherte Fluid kann nun in der Messzelle überwacht werden. Hierfür sind die Elemente des Beleuchtungssystems und des Kamerasystems, also die zumindest eine Lichtquelle und die zumindest eine Kameraeinheit, derart angeordnet, dass das Messvolumen mit dem partikelangereicherten Fluid zumindest teilweise ausgeleuchtet ist, und von diesem ausgeleuchteten Bereich Aufnahmen erstellt werden. Hierfür kann, wie oben bereits ausgeführt, die Zellenwandung bevorzugt zumindest abschnittweise transparent ausgebildet sein, um eine Anordnung der Elemente des Beleuchtungssystems und des Kamerasystems außerhalb des mit Fluid gefüllten Zellenvolumen zu ermöglichen.

Mit anderen Worten, die zumindest eine Lichtquelle beleuchtet das partikelangereicherte Fluid, insbesondere durch die bevorzugt transparente Zellenwandung, und die zumindest eine Kameraeinheit erstellt Aufnahmen des partikelangereicherten Fluids, erneut durch die bevorzugt transparente Zellenwandung. Wenn vorhanden, können die Abschnitte der transparenten Zellenwandung, durch welche die Beleuchtung erfolgt, dabei gleich und/oder verschieden sein zu denjenigen Abschnitten der transparenten Zellenwandungen, durch welche die Aufnahmen erstellt werden.

Die durch das Kamerasystem, insbesondere die zumindest eine Kameraeinheit, erstellten Aufnahmen werden über die datenkommunizierende Verbindung and das Auswertesystem weitergegeben. Das Auswertesystem empfängt die Bilder und analysiert diese, um die Eigenschaften der Partikel im Fluid zu ermitteln. Hierbei können zum Beispiel Algorithmen zum Erkennen einzelner Partikel oder von Partikelgruppen, zum Bestimmen von Partikelformen, zum Ermitteln einer Partikelgeschwindigkeit oder ähnliches zum Einsatz kommen. Als Ergebnis liegen nach der Auswertung Informationen über die ermittelten Eigenschaften der Partikel im Fluid vor.

Zusammenfassend können durch eine erfindungsgemäße Vorrichtung Eigenschaften von Partikeln in einem Fluid ermittelt werden. Durch den erfindungsgemäßen Einsatz eines Drallgenerators kann sichergestellt werden, dass im Wesentlichen unabhängig vom eingesetzten Fluid und der Art der vorhandenen Partikel partikelangereichertes Fluid an der Leitungswandung lokalisiert und anschließend der Messzelle zugeführt werden kann. Eine Ermittlung der Eigenschaften der Partikel im Fluid kann daher ohne aufwändige Anpassung der Messapparatur an die jeweilig vorhandenen Materialien, sowohl des Fluids als auch der Partikel, erfolgen.

Weiter kann die erfindungsgemäße Vorrichtung dahingehend ausgebildet sein, dass die zumindest eine Lichtquelle und die zumindest eine Kameraeinheit derart angeordnet und zueinander derart ausgerichtet sind, dass der ausgeleuchtete Bereich zwischen der zumindest einen Lichtquelle und der zumindest einen Kameraeinheit positioniert ist. Mit anderen Worten, die zumindest eine Lichtquelle sendet ihr Licht in Richtung der zumindest einen Kameraeinheit aus, und ein Blickfeld der zumindest einen Kameraeinheit ist auf die zumindest eine Lichtquelle gerichtet.

Dies kann insbesondere dadurch ermöglicht werden, dass die optische Achsen dieser beiden Elemente parallel, bevorzugt deckungsgleich ausgerichtet sind. Ein Durchlichtbetrieb zum Erstellen der Aufnahmen kann dadurch ermöglicht werden. Bevorzugt kann ferner eine starke Lichtquelle verwendet werden, da eine Latenzzeit einer Aufnahme der Kameraeinheit oftmals antiproportional zur Beleuchtungsstärke ist. Auf diese Weise können Aufnahmen schneller erstellt werden. Dies ist insbesondere bei hohen Geschwindigkeiten der Partikel von Vorteil.

Auch kann die erfindungsgemäße Vorrichtung dadurch gekennzeichnet sein, dass die zumindest eine Kameraeinheit einen ereignisbasierten Bildsensor aufweist. Ein ereignisbasierter Bildsensor, auch als neuromorpher Bildsensor bezeichnet, bringt für diesen Anwendungsfall viele Vorteile mit sich. Im Gegensatz zu herkömmlichen Kameras, die Bilder in festen Intervallen aufnehmen, erfasst ein ereignisbasierter Bildsensor bevorzugt nur die Änderungen in der Szene. Jedes Pixel in der Kameraeinheit arbeitet bevorzugt unabhängig und meldet Änderungen insbesondere in Echtzeit. Dies führt zu einer effizienteren Datenverarbeitung durch die Verarbeitungsvorrichtung, da nur relevante Informationen verarbeitet werden. Dadurch muss die Auswerteeinheit nicht ganz so leistungsstark sein verglichen mit dem Fall, dass eine herkömmliche Kamera eingesetzt wird. Da nur Veränderungen erfasst und verarbeitet werden, verbrauchen ereignisbasierte Bildsensoren deutlich weniger Energie als traditionelle Bildsensoren. Dies ist besonders vorteilhaft für batteriebetriebene Geräte. Neuromorphe Bildsensoren können sehr schnelle Bewegungen erfassen, weil sie eine viel höhere zeitliche Auflösung haben als herkömmliche Bildsensoren. Dies macht sie ideal für Anwendungen, die schnelle Reaktionen erfordern, wie z.B. das Erstellen von Aufnahmen von sich schnell bewegenden Partikeln im Fluid. Da nur Änderungen erfasst werden, produzieren diese ereignisbasierten Bildsensoren weniger Daten, was die Anforderungen an Speicher und Bandbreite reduziert und die Geschwindigkeit der Datenverarbeitung erhöht. Ereignisbasierte Bildsensoren sind darüber hinaus weniger anfällig für Probleme bei wechselnden Lichtverhältnissen, da sie sich auf Änderungen in der Szene konzentrieren und nicht auf das absolute Lichtniveau. Insgesamt kann somit durch den Einsatz eines ereignisbasierten Bildsensors in der zumindest einen Kameraeinheit insbesondere die Zeitauflösung bei der Ermittlung der Eigenschaften der Partikel im Fluid verbessert werden, wobei gleichzeitig ein Energieverbrauch der Kameraeinheit und auch ein anfallendes Datenvolumen gesenkt werden kann.

Weiter kann bei der erfindungsgemäßen Vorrichtung vorgesehen sein, dass die zumindest eine Kameraeinheit ein telezentrisches Objektiv aufweist. Telezentrische Objektive zeichnen sich dadurch aus, dass sie die aufgenommenen Objekte ohne perspektivische Verzerrung aufnehmen. Dies wird dadurch ermöglicht, dass der Strahlengang im Objektiv parallelisiert ist, mit anderen Worten, dass die Eintritts- oder Austrittspupille im Unendlichen liegt. Die Partikel können auf diese Weise ohne Verzerrung in den Aufnahmen abgebildet werden, wodurch die Auswertung durch die Auswerteeinheit, und damit das Ermitteln der Eigenschaften der Partikel, insgesamt vereinfacht werden kann.

Auch kann die erfindungsgemäße Vorrichtung dadurch gekennzeichnet sein, dass eine Entnahmevorrichtung zum Entnehmen des partikelangereicherten Fluids aus dem Leitungsvolumen und zum Zuführen des entnommenen partikelangereicherten Fluids zur Messzelle vorgesehen ist, wobei die Entnahmevorrichtung eine Absaugeinheit zum Erzeugen einer Druckdifferenz und/oder eine von der Leitungswandung in das Leitungsvolumen ragende Entnahmelanze zum Auffangen des partikelangereicherten Fluids aufweist. In dieser ersten alternativen Ausgestaltung der erfindungsgemäßen Vorrichtung ist die Messzelle getrennt vom Leitungselement ausgeführt. Durch die räumliche Trennung von Messzelle und Leitungselement ist eine räumliche Anordnung des Beleuchtungssystems und des Kamerasystems um die Messzelle besonders einfach möglich, da insbesondere ausreichend Bauraum vorhanden ist.

Zum Bereitstellen von partikelangereichertem Fluid in der Messzelle ist eine Entnahmevorrichtung vorgesehen, die das entsprechende partikelangereicherte Fluid in Flussrichtung nach dem Drallgenerator nahe der Leitungswandung dem Leitungsvolumen entnimmt, und der Messzelle zuführt. Insbesondere kann die Entnahmevorrichtung die dafür nötigen Leitungen aufweisen.

Zum Entnehmen des partikelangereicherten Fluids kann die Entnahmevorrichtung beispielsweise eine Pumpeneinheit aufweisen, die einen Unterdruck zum Absaugen des partikelhaltigen Fluids durch eine Entnahmeöffnung in der Leitungswandung erzeugt.

Alternativ oder zusätzlich kann auch eine Entnahmelanze vorgesehenen sein, die nahe der ebenfalls vorhandenen Entnahmeöffnung ausgehend von der Leitungswandung in das Leitungsvolumen ragt. Die Entnahmelanze ragt bevorzugt zumindest in denjenigen Bereich des Leitungsvolumens, in dem das partikelhaltige Fluid konzentriert ist. Insbesondere erstreckt sich die Entnahmelanze weniger als bis zu einer Mitte eines Querschnitts des Leitungselements, bevorzugt reicht die Erstreckung nur vom Rand des Leitungselements bis weniger als 50% oder weniger als 30% der Strecke bis zur Mitte des Querschnitts. Eine derartige Entnahmelanze kann bevorzugt ein Profilelement mit einem im Wesentlichen u-förmigen Querschnitt sein, wobei die offene Seite des Profils der Flussrichtung des Fluids entgegengesetzt ist. Ein Auffangen sowie ein anschließendes Leiten des Fluids und der darin enthaltenen Partikel kann dadurch erleichtert werden. Auch kann die Entnahmelanze derart im Leitungselement angeordnet sein, dass ein Ende der Entnahmelanze, das in das Leitungsvolumen ragt, entlang der Flussrichtung oberhalb des entgegengesetzten Endes der Entnahmelanze an der Leitungswandung positioniert ist. Auf diese Weise wird das entnommene Fluid bereits durch den Fluss des Fluids im Leitungselement entlang der Entnahmelanze aus dem Leitungsvolumen hinausgetrieben.

Insgesamt wird partikelhaltiges Fluid durch die Entnahmelanze aufgefangen und dann, bevorzugt ebenfalls über entsprechende Leitungen, der Messzelle zugeführt. Hierfür kann ebenfalls ein durch eine Pumpeneinheit erzeugter Unterdruck eingesetzt werden. Alternativ oder zusätzlich sind auch andere Förderungsmöglichkeiten denkbar, beispielsweise eine mechanische Förderung durch eine entsprechend ausgestaltete Form der Entnahmelanze, die sich zum Beispiel schräg gegen die Flussrichtung in das Leitungsvolumen erstreckt und dadurch das partikelhaltige Fluid von selbst entlang der Entnahmelanze aus dem Leitungsvolumen herausgetrieben wird.

Gemäß einer alternativen Ausgestaltung kann bei der erfindungsgemäßen Vorrichtung vorgesehen sein, dass die Messzelle durch einen Messabschnitt des Leitungselements gebildet ist, wobei im Bereich des Messabschnitts das Leitungsvolumen dem Zellenvolumen sowie die Leitungswandung der Zellenwandung entspricht. Mit anderen Worten, das Beleuchtungssystem und das Kamerasystem sind direkt am und/oder um denjenigen Abschnitt des Leitungselements angeordnet, nämlich den Messabschnitt, der die Messzelle bildet. Ein besonders platzsparender Aufbau der erfindungsgemäßen Vorrichtung kann dadurch ermöglicht werden.

Auch kann die erfindungsgemäße Vorrichtung dahingehend weiterentwickelt sein, dass im Bereich des Messabschnitts im Leitungsvolumen ein Hohlraum zur Aufnahme der zumindest einen Lichtquelle oder der zumindest einen Kameraeinheit vorgesehen ist, wobei die zumindest eine Lichtquelle im Hohlraum und die zumindest eine Kameraeinheit außerhalb des Leitungsvolumens angeordnet sind, oder die zumindest eine Kameraeinheit im Hohlraum und die zumindest eine Lichtquelle außerhalb des Leitungsvolumens angeordnet sind. Insbesondere kann der Hohlraum hierbei im Wesentlichen mittig im Leitungsvolumen angeordnet sein, so dass der Hohlraum senkrecht zur Fließrichtung umlaufend von der Leitungswandung beabstandet ist, bevorzugt gleichmäßig beabstandet ist. So kann beispielsweise der Hohlraum eine entlang der Fließrichtung ausgerichtete Längsachse aufweisen, die wiederum zu einer ebenfalls zur Fließrichtung parallelen Achse des Leitungsvolumens kollinear ist.

Durch den Hohlraum, der insbesondere entsprechend transparente Wände oder zumindest Wandabschnitte aufweist, kann eine Kompaktheit der erfindungsgemäßen Vorrichtung noch weiter gesteigert werden. Insbesondere kann durch die Anordnung eines der Elemente, Lichtquelle oder Kameraeinheit, im Hohlraum, und des entsprechend anderen Elements, also Kameraeinheit oder Lichtquelle, außerhalb des Leitungselements ein Durchlichtbetrieb besonders einfach und insbesondere besonders kompakt ermöglicht werden. Da durch den Drallgenerator die Partikel im Fluid im Wesentlichen vollständig in der Nähe der Leitungswandung getrieben sind, hat die Anordnung des Hohlraums

Weiter kann bei der erfindungsgemäßen Vorrichtung ferner vorgesehen sein, dass die zumindest eine Lichtquelle eine Diffusionsplatte zum Homogenisieren der Ausleuchtung aufweist. Leuchtquellen sind oftmals im wesentlichen punktförmig oder weisen eine im Verhältnis zur gesamten ausgeleuchteten Fläche kleine Leuchtfläche auf, von der das Licht der Lichtquelle ausgeht. Diese strukturellen Eigenschaften der Lichtquelle kann zu einem inhomogenen Beleuchtungsprofil führen, wodurch wiederum die durch das Kamerasystem erstellten Aufnahmen die abgebildeten Partikel nicht ideal darstellen. Durch eine Diffusionsplatte können diese Inhomogenitäten im Beleuchtungsprofil verwaschen werden. Das durch die Lichtquelle erzeugte Licht wird in beziehungsweise durch die Diffusionsplatte verteilt und beleuchtet dann ausgehend von der gesamten Fläche der Diffusionsplatte den ausgeleuchteten Bereich der Messzelle. Eine besonders homogene Beleuchtung der Partikel im partikelangereicherten Fluid kann dadurch erreicht werden.

Ferner kann die erfindungsgemäße Vorrichtung auch dadurch gekennzeichnet sein, dass das Kamerasystem zwei oder mehr Kameraeinheiten aufweist, wobei eine Ortsauflösung der zwei oder mehr Kameraeinheiten identisch ist und Blickfelder von jeweils zwei der zwei oder mehr Kameraeinheiten zumindest abschnittsweise überlappungsfrei sind. Insbesondere können die zwei oder mehr Kameraeinheiten gleiche Bildsensoren und, bis auf die jeweilige räumliche Anordnung und/oder Orientierung, gleiche Blickfelder aufweisen. Bevorzugt können die zwei oder mehr Kameraeinheiten auch vollständig identisch ausgebildet sein. Dadurch, dass die Blickfelder der beiden Kameraeinheiten zumindest teilweise überlappungsfrei sind, kann das Blickfeld des gesamten Kamerasystems, das sich aus den Blickfeldern sämtlicher Kameraeinheiten zusammensetzt, vergrößert werden. Bevorzugt sind die Blickfelder der einzelnen Kameraeinheiten völlig überlappungsfrei, um ein möglichst großes Blickfeld des gesamten Kamerasystems zu erhalten. Da die Ortsauflösung der beiden Kameraeinheiten identisch ist, können die Aufnahmen der beiden Kameraeinheiten bei der Auswertung durch die Auswerteeinheit besonders einfach zusammengesetzt und gemeinsam ausgewertet werden.

Alternativ oder zusätzlich kann bei der erfindungsgemäßen Vorrichtung auch vorgesehen sein, dass das Kamerasystem zwei oder mehr Kameraeinheiten aufweist, wobei eine Ortsauflösung der zwei oder mehr Kameraeinheiten verschieden ist. Insbesondere können Kameraeinheiten bei gleichem Bildsensor unterschiedlich enge Blickfelder aufweisen, oder in ihnen könne bei gleichem Blickfeld Bildsensoren mit unterschiedlichen Pixelzahlen verbaut sein. Alternativ können sich die Kameraeinheiten auch sowohl in ihren Blickfeldern als auch in den Pixelzahlen ihrer Bildsensoren unterscheiden, so lange nicht beide Kameraeinheiten dieselbe Ortsauflösung aufweisen. Durch die unterschiedliche Ortsauflösung können durch die einzelnen Kameraeinheiten jeweils Partikel verschiedener Größen abgelichtet werden. Eine Bandbreite an detektierbaren Partikelgrößen kann dadurch bei einer erfindungsgemäßen Vorrichtung erweitert werden. Die Blickfelder der einzelnen Kameraeinheiten mit verschiedenen Ortsauflösungen können hierbei ebenfalls überlappungsfrei sein, wodurch die Messungen verschiedener Partikelgrößen an unterschiedlichen Stellen im Messvolumen der Messzelle erfolgen. Insbesondere ist jedoch ein teilweises oder sogar vollständiges Überlappen der einzelnen Blickfelder denkbar, wodurch eine Ermittlung von Partikeln unterschiedlichster Größen an derselben Stelle im Messvolumen realisiert werden kann.

Die erfindungsgemäße Vorrichtung kann ferner dadurch weiterentwickelt sein, dass die zwei oder mehr Kameraeinheiten zeitlich synchronisiert sind und/oder dass das Auswertesystem zum zeitlichen Synchronisieren der Aufnahmen der zwei oder mehr Kameraeinheiten ausgebildet ist. Das direkte zeitliche Synchronisieren der zwei oder mehr Kameraeinheiten kann beispielsweise durch einen externen Zeitgeber ermöglicht werden, wobei hierfür auch die Auswerteeinheit eingesetzt werden kann. Alternativ kann auch ein Zeitstempel einer der Kameraeinheiten verwendet werden, um alle anderen Kameraeinheiten darauf zu synchronisieren. Auch eine nachträgliche Synchronisation erst in der Auswerteeinheit ist denkbar, wobei hierfür bevorzugt die Auswerteeinheit eine Kalibration mit allen Kameraeinheiten durchführt, um für jede der Kameraeinheiten einen spezifischen zeitlichen Versatz zu bestimmen. Im Ergebnis können die Aufnahmen der zeitlich synchronisierten zwei oder mehr Kameraeinheiten als zu einem Zeitpunkt aufgenommen behandelt werden, wodurch eine zeitliche Auflösung der ermittelten Eigenschaften der Partikel insgesamt gesteigert werden kann.

Ferner kann bei der erfindungsgemäßen Vorrichtung vorgesehen sein, dass die Auswerteeinheit zum Ermitteln zumindest einer der folgenden Eigenschaften, insbesondere deren zeitlichen Verlauf, der Partikel im Fluid ausgebildet ist:
- Partikeldichte im Fluid
- räumliche Partikelverteilung im Fluid
- Partikelgrößenverteilung
- Partikelform
- Partikelgeschwindigkeit

Diese Liste ist nicht abgeschlossen, so dass auch weitere Eigenschaften der Partikel ermittelt werden können, falls technisch möglich und sinnvoll.

Zum Ermitteln der Eigenschaften kann die Auswerteeinheit die Aufnahmen des Kamerasystems dahingehend überprüfen um insbesondere die einzelnen Partikel zu erkennen. Mit anderen Worten, die Auswerteeinheit ermittelt in den Aufnahmen diejenigen Bereiche der Aufnahmen, die einzelne Partikel darstellen, inklusiver beispielsweise deren Form und Größe.

Eine Partikeldichte ergibt sich hierbei durch die durch Partikel abgedeckte Fläche durch die gesamte Fläche der jeweiligen Aufnahme beziehungsweise Aufnahmen. Da durch den Drallgenerator die Partikel in Richtung der Leitungswandung getrieben werden, muss bei der Auswertung auch dies berücksichtigt werden, beispielsweise durch eine Extrapolation der ermittelten Partikeldichte auf das dreidimensionale Volumen des Leitungselements. Auch die Bestimmung der räumlichen Partikelverteilung wird durch den Drallgenerator beeinflusst, so dass hier gegebenenfalls nur eine Projektion der Partikelverteilung auf die Leitungswandung ermittelt werden kann. Da im Idealfall sämtliche Partikel zur Leitungswandung getrieben und der Messzelle zugeführt worden sind, kann eine Verteilung der Partikelgröße mit hoher Genauigkeit erfolgen, insbesondere wenn mehrere Kameraeinheiten mit unterschiedlicher Ortsauflösung zum Einsatz kommen. Diese unterschiedlichen Ortsauflösungen ermöglichen auch eine Ermittlung der Partikelformen mit hoher Genauigkeit für unterschiedlichste Partikelgrößen. Durch einen Vergleich von zeitlich schnell aufeinanderfolgenden Aufnahmen, bei der Verwendung von normalen Matrixbildsensoren wie CCD oder CMOS, insbesondere jedoch der Einsatz von ereignisbasierten Bildsensoren ermöglicht das Ermitteln der Geschwindigkeiten der einzelnen Partikel mit hoher Präzision.

Weiter kann bei der erfindungsgemäßen Vorrichtung vorgesehen sein, dass das Beleuchtungssystem das Messvolumen vollständig ausleuchtet, und/oder dass das Blickfeld des Kamerasystems das Messvolumen vollständig abdeckt. Bevorzugt leuchtet das Beleuchtungssystem das Messvolumen vollständig aus und das Kamerasystem deckt das Messvolumen vollständig ab. Eine besonders umfassende und vollständige Vermessung aller im Messvolumen vorhandenen Partikel kann dadurch ermöglicht werden, wodurch die Ermittlung der Eigenschaften der Partikel im Fluid insgesamt weiter gesteigert werden kann.

Auch kann die erfindungsgemäße Vorrichtung dadurch gekennzeichnet sein, dass die Messzelle vom Drallgenerator entlang der Flussrichtung in einem ersten Abstand angeordnet ist, der einem Ein- bis Fünffachen, bevorzugt einem Dreifachen, eines Durchmessers des Leitungsvolumens entspricht. Der Drallgenerator erzeugt eine Verwirbelung im Fluid und treibt dadurch die Partikel in Richtung der Leitungswandung. Durch einen ersten Abstand zwischen Drallgenerator und Messzelle, insbesondere beispielsweise einem Abstand zwischen dem Drallgenerator und der Entnahmevorrichtung oder dem Messabschnitt, kann sichergestellt werden, dass die Partikel auch tatsächlich an der Leitungswandung angekommen sind. Ein Abstand von einem Ein- bis Fünffachen, insbesondere eines Dreifachen, eines Durchmessers des Leitungsvolumens hat sich hierbei als besonders geeignet herausgestellt.

Darüber hinaus kann die erfindungsgemäße Vorrichtung dadurch gekennzeichnet sein, dass in Flussrichtung vor dem Drallgenerator ein Gleichrichter zum Vermindern von Turbulenzen im Fluid angeordnet ist, wobei insbesondere der Gleichrichter vom Drallgenerator entlang der Flussrichtung in einem zweiten Abstand angeordnet ist, der einem Zwei- bis Zehnfachen, bevorzugt einem Fünffachen, des Durchmessers des Leitungsvolumens entspricht. Die durch den Drallgenerator erzeugte Verwirbelung des Fluids hängt insbesondere auch vom Verwirbelungszustand des Fluids vor dem Drallgenerator ab. Durch einen Gleichrichter, der im Leitungsvolumen vor dem Drallgenerator angeordnet ist, können bereits vorhandene Turbulenzen beziehungsweise Verwirbelungen im Fluid vermindert werden, so dass am Drallgenerator das Fluid ohne Turbulenzen ankommt. Mit anderen Worten, das Fluid vor dem Drallgenerator ist, bevorzugt zu jeder Zeit, ein gleichmäßig und bevorzugt verwirbelungsfrei strömendes Fluid. Die vom Drallgenerator erzeugten Verwirbelungen sind konstant, und somit deren Einfluss auf die Partikel beim Treiben in Richtung der Leitungswandung immer gleich und vorhersehbar. Als geeigneter zweiter Abstand, in dem der Gleichrichter vor dem Drallgenerator im Leitungsvolumen angeordnet ist, hat sich ein Zwei- bis Zehnfaches, insbesondere ein Fünffaches, eines Durchmessers des Leitungsvolumens als besonders geeignet herausgestellt.

Gemäß einem zweiten Aspekt der Erfindung wird die Aufgabe gelöst durch ein erfindungsgemäßes Verfahren zum Ermitteln von Eigenschaften von Partikeln in einem Fluid, durch eine Vorrichtung nach einem der vorstehenden Ansprüche.

Das erfindungsgemäße Verfahren ist dadurch gekennzeichnet, dass die Vorrichtung einen im Leitungselement angeordneten Drallgenerator aufweist, wobei durch den Drallgenerator eine Verwirbelung des Fluids zum Treiben der Partikel in Richtung der Leitungswandung und damit zum Bilden eines partikelangereicherten Fluids erzeugt wird und dieses partikelangereicherte Fluid mit in Richtung der Leitungswandung getriebenen Partikeln in Flussrichtung nach dem Drallgenerator einer Messzelle mit einem Zellenvolumen und einer, bevorzugt zumindest abschnittsweise transparenten, Zellenwandung zugeführt wird, wobei ferner das Beleuchtungssystem und das Kamerasystem derart bezüglich der Messzelle angeordnet sind, dass die Messzelle durch die zumindest eine Lichtquelle des Beleuchtungssystems zumindest teilweise ausgeleuchtet wird und durch die zumindest eine Kameraeinheit des Kamerasystems Aufnahmen des ausgeleuchteten Bereichs der Messzelle erstellt werden, und wobei ferner durch das Auswertesystem die Aufnahmen des Kamerasystems zum Ermitteln von Eigenschaften von Partikeln im Fluid ausgewertet werden.

Das erfindungsgemäße Verfahren gemäß dem zweiten Aspekt der Erfindung wird durch eine Vorrichtung gemäß dem ersten Aspekt der Erfindung ausgeführt. Sämtliche Merkmale und Vorteile, die voranstehend mit Bezug auf eine Vorrichtung gemäß dem ersten Aspekt der Erfindung beschrieben sind, können somit auch durch ein Verfahren gemäß dem zweiten Aspekt der Erfindung ermöglicht werden, wenn es durch eine entsprechende Vorrichtung ausgeführt wird.

Wesentlich für das erfindungsgemäße Verfahren ist der Drallgenerator, durch den im Fluid durch Einbringen einer Verwirbelung die Partikel gegen die Leitungswandung getrieben werden. Dadurch ist es möglich, dieses partikelangereicherte Fluid einer Messzelle zuzuführen, in der eine einfache Ausleuchtung durch das Beleuchtungssystem und ein unkompliziertes Erstellen durch das Kamerasystem ermöglicht ist. Diese Aufnahmen werden im Anschluss durch die Auswerteeinheit ausgewertet und dadurch die Eigenschaften der Partikel im Fluid, beispielsweise deren Größe, Form oder Geschwindigkeit, ermittelt. Auch globale Größen wie zum Beispiel eine Partikeldichte und/oder Partikelverteilung im Fluid kann bestimmt werden. Durch einen Vergleich von Messungen zu verschiedenen Zeitpunkten ist auch eine Ermittlung eines zeitlichen Verlaufs der einzelnen Eigenschaften denkbar.

Zusammenfassend können auch durch ein erfindungsgemäßes Verfahren Eigenschaften von Partikeln in einem Fluid ermittelt werden. Durch den erfindungsgemäßen Einsatz eines Drallgenerators kann sichergestellt werden, dass im Wesentlichen unabhängig vom eingesetzten Fluid und der Art der vorhandenen Partikel partikelangereichertes Fluid an der Leitungswandung lokalisiert und anschließend der Messzelle zugeführt werden kann. Eine Ermittlung der Eigenschaften der Partikel im Fluid kann daher ohne aufwändige Anpassung der Messapparatur an die jeweilig vorhandenen Materialien, sowohl des Fluids als auch der Partikel, erfolgen.

Im Folgenden werden Ausführungsformen der erfindungsgemäßen Vorrichtung und des erfindungsgemäßen Verfahrens anhand von Figuren beispielhaft beschrieben. Es zeigen jeweils schematisch im Einzelnen
- Fig. 1: eine mögliche Ausgestaltung einer erfindungsgemäßen Vorrichtung,
- Fig. 2: eine Messzelle mit Entnahmevorrichtung,
- Fig. 3: eine durch einen Messabschnitt gebildete Messzelle, und
- Fig. 4: eine mögliche Ausgestaltung eines Drallgenerators.

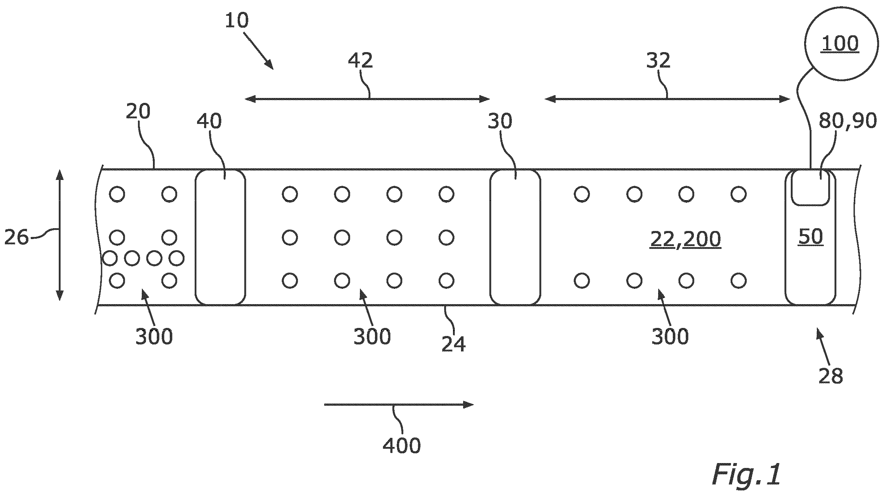

Fig. 1 zeigt eine sehr schematische Ansicht einer möglichen Ausgestaltung einer erfindungsgemäßen Vorrichtung 10 zum Ermitteln von Eigenschaften von Partikeln 300 in einem Fluid 200. Zum Ermitteln der Eigenschaften kann insbesondere ein erfindungsgemäßes Verfahren eingesetzt werden. Das Fluid 200 ist in einem Leitungselement 20 geführt und fließt in diesem in einer Flussrichtung 400. Das Leitungselement 20 weist insbesondere ein durch eine Leitungswandung 24 umschlossenes Leitungsvolumen 22 auf, und kann insbesondere als ein Rohr ausgebildet sein. Das Leitungsvolumen 22 kann bevorzugt einen kreisförmigen Querschnitt mit einem Durchmesser 26 aufweisen. Im Fluid 200 sind Partikel 300 enthalten, deren Eigenschaften durch die erfindungsgemäße Vorrichtung 10 ermittelt werden können.

Neben der Messzelle 50, die nachfolgend beschrieben wird, weist die erfindungsgemäße Vorrichtung 10 als eines seiner wesentlichen Elemente einen Drallgenerator 30 auf. Durch diesen Drallgenerator 30, der als feststehendes Bauteil ohne bewegliche Teile ausgebildet und damit besonders robust und wartungsfreundlich ausgebildet ist, werden, wie in Flussrichtung 400 nach dem Drallgenerator 30 dargestellt, die Partikel 300 in Richtung der Leitungswandung 24 zu treiben. Mit anderen Worten, durch den Drallgenerator 30 erfolgt eine Anreicherung von Partikeln 300 in der Nähe der Leitungswandung 24, an der Leitungswandung 24 partikelangereichertes Fluid 200, 300 lokalisiert, wohingegen die Mitte des Leitungsvolumens 22 entsprechend im Wesentlichen frei von Partikeln 300 ist.

In einem ersten Abstand 32 nach dem Drallgenerator 30, der beispielsweise ein Dreifaches des Durchmessers 26 betragen kann und durch den sichergestellt werden kann, dass die Partikel 300 vollständig an der Leitungswandung 24 lokalisiert sind, ist die oben bereits erwähnte Messzelle 50 angeordnet. Durch den Einsatz des Drallgenerators 30 in der erfindungsgemäßen Vorrichtung 30 kann sichergestellt werden, dass im Wesentlichen unabhängig vom eingesetzten Fluid 200 und der Art der vorhandenen Partikel 300 partikelangereichertes Fluid 200, 300 an der Leitungswandung 24 lokalisiert und anschließend der Messzelle 50 zugeführt werden kann. Eine Ermittlung der Eigenschaften der Partikel 300 im Fluid 200 kann daher ohne aufwändige Anpassung der Messapparatur an die jeweilig vorhandenen Materialien, sowohl des Fluids 200 als auch der Partikel 300, erfolgen.

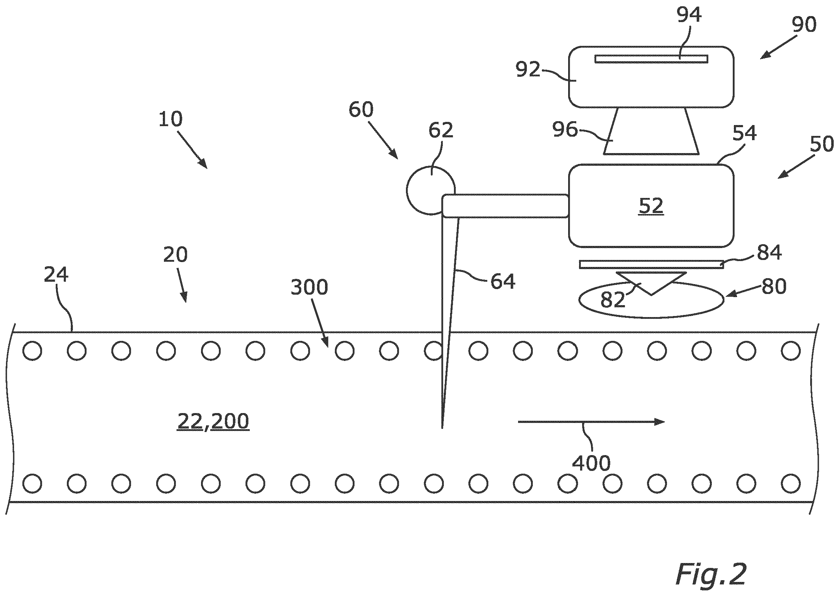

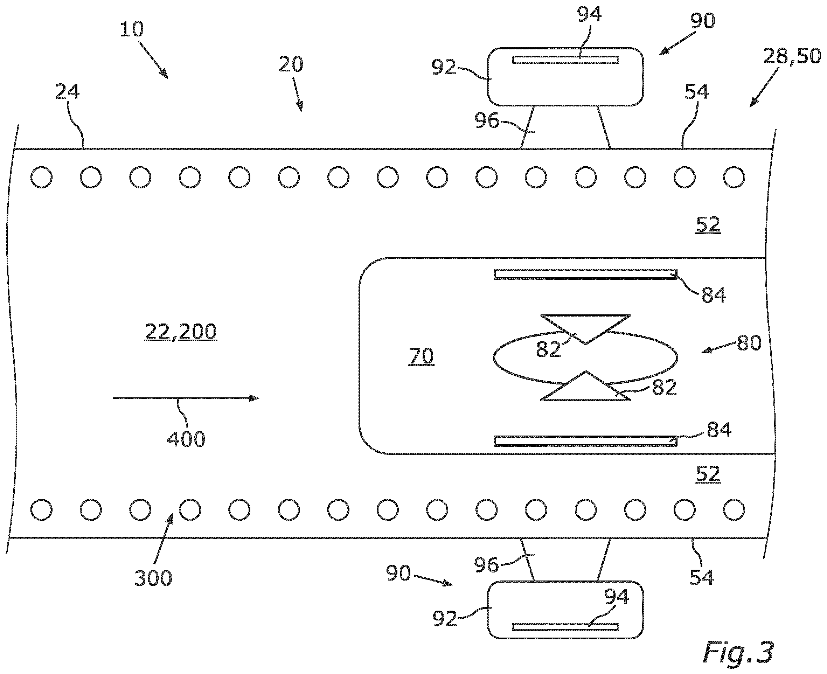

In der Messzelle 50 werden die Partikel 300 durch ein Beleuchtungssystem 80 beleuchtet und durch ein Kamerasystem 90 werden, bevorzugt digitale, Aufnahmen der Partikel 300 erstellt. Unterschiedliche Ausgestaltungen der Messzelle 50, des Beleuchtungssystems 80 und des Kamerasystems 90 werden nachfolgend mit Bezug auf Fig. 2, 3 noch näher erläutert.

Die durch das Kamerasystem 90 erstellten Aufnahmen werden über eine Datenkommunikation an eine Auswerteeinheit 100 übertragen. Die Datenkommunikation ist in Fig. 1 als kabelgebunden dargestellt, kann jedoch auch kabellos erfolgen. In der Auswerteeinheit 100, die beispielsweise ein Rechner sein kann, werden die Aufnahmen ausgewertet und die Eigenschaften der Partikel 300 bestimmt, beispielsweise eine Partikeldichte, eine Partikelgeschwindigkeit, und/oder eine Größe oder Form der einzelnen Partikel 300.

Wie dargestellt kann ein einem zweiten Abstand 42 entlang der Flussrichtung 400 vor dem Drallgenerator 30 ein optionaler Gleichrichter 40 im Leitungselement 20 positioniert sein. Wie im Leitungsvolumen 22 vor dem Gleichrichter 40 dargestellt, kann eine Verteilung der Partikel 300 im Fluid 200 ungleichmäßig sein. Um eine optimale Wirkung des Drallgenerators 30 zu gewährleisten, ist jedoch eine gleichmäßige Verteilung der Partikel 300 im Fluid 200 von Vorteil. Durch einen Gelichrichter 40 kann diese gleichmäßige Verteilung der Partikel 300 im Fluid 200 ermöglicht werden, wobei durch einen ausreichend großen zweiten Abstand 42 zwischen dem Gleichrichter 40 und dem Drallgenerator 30, der beispielsweise ein Fünffaches des Durchmessers 26 beträgt, eine ausreichende Homogenisierung der Verteilung der Partikel 300 im Fluid 200 sichergestellt werden kann.

In den beiden Fig. 2, 3 werden schematisch zwei unterschiedliche Ausgestaltungen der Messzelle 50 gezeigt. Im Folgenden werden zuerst Merkmale beschrieben, die beide Ausgestaltungen aufweisen, und anschließend auf die Unterschiede eingegangen.

In beiden Fig. 2, 3 sind die Elemente des jeweiligen Beleuchtungssystems 80 sowie des jeweiligen Kamerasystems 90 näher gezeigt. Ferner ist in beiden Fällen eine Messzelle 50 gezeigt, dessen Messvolumen 52 durch partikelangereichertes Fluid 200, 300 durchströmt wird.

Das Beleuchtungssystem 80 weist insbesondere eine oder mehrere Lichtquellen 82 auf, die zum Beleuchten beziehungsweise Ausleuchten eines Zellenvolumens 52 der Messzelle 50 vorgesehen sind. Bevorzugt wird durch die Lichtquelle 82 oder die Lichtquelle 82 des Beleuchtungssystems 80 das Zellenvolumen 52 der Messzelle 50 vollständig ausgeleuchtet. Um Abschattungen und/oder Inhomogenitäten in der Ausleuchtung, beispielsweise hervorgerufen durch eine punktförmige Lichtquelle 82, zu vermeiden, können entsprechende Diffusionsplatten 84 vorgesehen sein. Die jeweilige Diffusionsplatte 84 ist zwischen der entsprechenden Lichtquelle 82 und der Zellenwandung 84 angeordnet, wodurch eine homogene Ausleuchtung des Zellenvolumens 82 erzeugt werden kann. Eine besonders umfassende und insbesondere vollständige Erfassung aller sich im Zellenvolumen 52 befindenden Partikel 300 kann dadurch ermöglicht werden. Das gesamte Beleuchtungssystem 80 befindet sich außerhalb des Zellenvolumens 52. Für das Ausleuchten des Zellenvolumens 52 kann die Zellenwandung 54 wie abgebildet insbesondere zumindest abschnittsweise transparent ausgebildet sein, so dass Licht der Lichtquelle 82 beziehungsweise der Lichtquellen 82 in das Zellenvolumen 52 einstrahlen kann.

Analog zum Beleuchtungssystem 80 weist auch das Kamerasystem 90 eine oder mehrere Kameraeinheiten 92 auf. Die jeweilige Kameraeinheit 92 erstellt eine Aufnahme eines Abschnitts des Zellenvolumens 52 beziehungsweise des darin enthaltenen partikelangereicherten Fluids 200, 300. Bevorzugt wird durch die Kameraeinheit 92 oder die Kameraeinheiten 82 des Kamerasystems 90 das Zellenvolumen 52 der Messzelle 50 vollständig erfasst. Auch das gesamte Kamerasystem 90 befindet sich außerhalb des Zellenvolumens 52. Auch für die Aufnahmen des Kamerasystems 90 kann daher die Zellenwandung 54 bevorzugt insbesondere zumindest abschnittsweise transparent ausgebildet sein.

Wie dargestellt können Lichtquellen 82 und Kameraeinheiten 92 einander zugewandt angeordnet sein. Dadurch kann ein sogenannter Durchlichtbetrieb ermöglicht werden, der sich für ein Erstellen von Aufnahmen von Partikeln 300 in einem Fluid 200 als besonders geeignet erwiesen hat.

Für Ausgestaltungen der erfindungsgemäßen Vorrichtung 10 mit mehreren Kameraeinheiten 92 ist es vorteilhaft, wenn diese zeitlich synchronisiert sind. Dies kann beispielsweise durch die Auswerteeinheit 100 (siehe Fig. 1) erfolgen. Alternativ oder zusätzlich kann auch eine der eingesetzten Kameraeinheiten 92 als Zeitgeber definiert werden, der auch für die restlichen Kameraeinheiten 92 die jeweilige Systemzeit bestimmt.

Weiter kann bei einem Einsatz von mehreren Kameraeinheiten 92 vorgesehen sein, dass deren Ortsauflösung identisch oder unterschiedlich ist. Bei identischen Ortsauflösungen können die Blickfelder der einzelnen Kameraeinheiten 92 zumindest teilweise, bevorzugt vollständig, disjunkt ausgebildet sein, so dass sich insgesamt ein größeres Blickfeld für das gesamte Kamerasystem 90 ergibt. Bei unterschiedlichen Ortsauflösungen ist dies ebenfalls möglich, allerdings gibt es dann auch die alternative Ausgestaltung, dass sich die Blickfelder der einzelnen Kameraeinheiten 92 zumindest teilweise, bevorzugt vollständig, überlappen, wobei durch die verschiedenen Ortsauflösungen Partikel 300 unterschiedlicher Größe in ein und demselben Bereich des Messvolumens 52 identifiziert werden können.

Die einzelnen Kameraeinheiten 92 können bevorzugt einen ereignisbasierten Bildsensor 94 aufweisen. Im Gegensatz zu Bildsensoren 94, die auf CCD- oder CMOS-Technik beruhen, werden bei ereignisbasierten Bildsensoren 94 nicht sämtliche Pixel gleichzeitig ausgelesen, sondern die einzelnen Pixel werden, zusammen mit einem Zeitstempel, nur dann ausgelesen, wenn sie jeweils eine Intensitätsänderung detektieren. Dadurch kann zum einen ein Energiebedarf der Kameraeinheit 92, und damit des gesamten Kamerasystems 90 beziehungsweise der gesamten erfindungsgemäßen Vorrichtung 10, ermöglicht werden. Zum anderen kann darüber hinaus auch eine besonders hohe Zeitauflösung beim Ermitteln der Eigenschaften der Partikel 300 erreicht werden.

Weiter können die Objektive 96 der einzelnen Kameraeinheiten 92 bevorzugt als telezentrische Objektive 96 ausgebildet sein. Auf diese Weise können die Partikel 300 ohne Verzerrung in den Aufnahmen der Kameraeinheiten 92 abgelichtet werden. Eine Auswertung durch die Auswerteeinheit 100 (siehe Fig. 1), und damit das Ermitteln der Eigenschaften der Partikel 300, kann dadurch insgesamt vereinfacht werden.

Fig. 2 zeigt eine erste mögliche Ausgestaltung einer Messzelle 50 der erfindungsgemäßen Vorrichtung 10. Insbesondere ist die Messzelle 50 außerhalb des Leitungselements 20 angeordnet. Ein Zugang zur Messzelle 50, insbesondere für das Beleuchtungssystem 80 und das Kamerasystem 90, ist dadurch besonders einfach möglich.

Um das partikelangereicherte Fluid 200, 300 zur Messzelle 50 zu leiten ist eine Entnahmevorrichtung 60 vorgesehen. In der dargestellten Ausgestaltung weist diese Entnahmevorrichtung 60 eine Entnahmelanze 64 auf, die ausgehend von der Leitungswandung 24 in das Leitungsvolumen 22 ragt. Partikelhaltiges Fluid 200, 300 wird dadurch durch die Entnahmelanze 64 aus dem Leitungsvolumen 22 entnommen und über eine entsprechend vorhandene fluidkommunizierende Verbindung der Messzelle 50 zugeführt. Wie dargestellt, kann eine Absaugeinheit 62 vorgesehen sein, um diese Entnahme zu unterstützen. In anderen Ausgestaltungen kann die Entnahme jedoch auch rein mechanisch nur durch die Entnahmelanze 64 erfolgen, oder es kann auch die Entnahmelanze 64 entfallen und nur der durch die Absaugeinheit 62 erzeugt Unterdruck ausreichen, um das partikelangereicherte Fluid 200, 300 aus dem Leitungsvolumen 22 zu entnehmen.

In der zu Fig. 2 alternativen Ausgestaltung, die in Fig. 3 dargestellt ist, ist die Messzelle 50 durch einen Messabschnitt 28 des Leitungselements 20 selbst gebildet. Ein besonders kompakter Aufbau einer erfindungsgemäßen Vorrichtung 10 kann dadurch ermöglicht werden. Bevorzugt kann sogar, wie dargestellt, im Inneren des Leitungsvolumens 22 ein Hohlraum 70 bereitgestellt werden, in dem dann beispielsweise Lichtquellen 82 des Beleuchtungssystems 80 positioniert werden. Die Kameraeinheiten 92 des Kamerasystems 90 sind dann entsprechend außerhalb des Leitungselements 20 angeordnet. Die entsprechenden Abschnitte der Leitungswandung 24 und der Wandung des Hohlraums 70 sind transparent ausgebildet. Alternativ oder zusätzlich zur dargestellten Ausgestaltung ist auch eine Anordnung von Kameraeinheiten 92 im Hohlraum 70 und entsprechend von Lichtquellen 82 außerhalb des Leitungselements 20 denkbar.

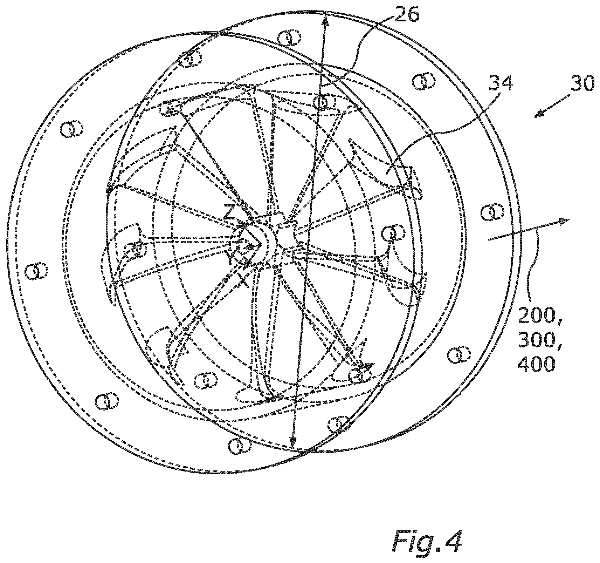

In Fig. 4 ist eine mögliche Ausgestaltung eines Drallgenerators 30 gezeigt, wie er ein einer erfindungsgemäßen Vorrichtung 10 eingesetzt werden kann. Der abgebildete Drallgenerator 30 ist insbesondere für ein Leitungsvolumen 22 (siehe Fig. 1) mit einem kreisförmigen Querschnitt mit einem konstanten Durchmesser 26 konstruiert. Eine Vielzahl von Drallschaufeln 34 erstrecken sich von einer Mitte des Drallgenerators 30 nach außen, also in Richtung der Leitungswandung 24 (siehe Fig. 1). Dadurch wird in Flussrichtung 400 strömendes Fluid 200 verwirbelt, und durch die Rotation werden Partikel 300 nach außen in Richtung der Leitungswandung 24 getrieben. Dadurch ist dort nach dem Drallgenerator 30 partikelangereichertes Fluid 200, 300 lokalisiert und kann der Messzelle 50 (siehe Fig. 1, 2, 3) zugeführt werden.

### Bezugszeichen

- 10: Vorrichtung

- 20: Leitungselement
- 22: Leitungsvolumen
- 24: Leitungswandung
- 26: Durchmesser
- 28: Messabschnitt

- 30: Drallgenerator
- 32: erster Abstand
- 34: Drallschaufeln

- 40: Gleichrichter
- 42: zweiter Abstand

- 50: Messzelle
- 52: Zellenvolumen
- 54: Zellenwandung

- 60: Entnahmevorrichtung
- 62: Absaugeinheit
- 64: Entnahmelanze

- 70: Hohlraum

- 80: Beleuchtungssystem
- 82: Lichtquelle
- 84: Diffusionsplatte
- 90: Kamerasystem
- 92: Kameraeinheit
- 94: Bildsensor
- 96: Objektiv

- 100: Auswerteeinheit

- 200: Fluid

- 300: Partikel

- 400: Flussrichtung

## Patentansprüche

1. Vorrichtung (10) zum Ermitteln von Eigenschaften von Partikeln (300) in einem Fluid (200), die Vorrichtung (10) aufweisend ein Leitungselement (20) mit einem von einer Leitungswandung (24) umschlossenen Leitungsvolumen (22) zum Leiten des Fluids (200) im Leitungsvolumen (22) entlang einer Flussrichtung (400), ein Beleuchtungssystem (80) mit zumindest einer Lichtquelle (82), ein Kamerasystem (90) mit zumindest einer Kameraeinheit (92) sowie ein mit der zumindest einen Kameraeinheit (92) datenkommunizierend verbundenen Auswerteeinheit (100),
wobei die Vorrichtung (10) einen im Leitungselement (20) angeordneten Drallgenerator (30) aufweist, wobei der Drallgenerator (30) zum Erzeugen einer Verwirbelung des Fluids (200) zum Treiben der Partikel (300) in Richtung der Leitungswandung (24) und damit zum Bilden eines partikelangereicherten Fluids (200) ausgebildet ist, wobei dieses partikelangereicherte Fluid (200) mit in Richtung der Leitungswandung (24) getriebenen Partikeln (300) in Flussrichtung (400) nach dem Drallgenerator (30) einer Messzelle (50) mit einem Zellenvolumen (52) und einer, bevorzugt zumindest abschnittsweise transparenten, Zellenwandung (54) zuführbar ist,
wobei ferner das Beleuchtungssystem (80) und das Kamerasystem (90) derart bezüglich der Messzelle (50) angeordnet sind, dass die zumindest eine Lichtquelle (82) des Beleuchtungssystems (80) zum zumindest teilweisen Ausleuchten der Messzelle (50) und die zumindest eine Kameraeinheit (92) des Kamerasystems (90) zum Erstellen von Aufnahmen des ausgeleuchteten Bereichs der Messzelle (50) ausgebildet sind, und wobei ferner das Auswertesystem zum Auswerten der Aufnahmen des Kamerasystems (90) zum Ermitteln von Eigenschaften von Partikeln (300) im Fluid (200) ausgebildet ist.

2. Vorrichtung (10) nach Anspruch 1,
**dadurch gekennzeichnet,**
**dass** die zumindest eine Lichtquelle (82) und die zumindest eine Kameraeinheit (92) derart angeordnet und zueinander derart ausgerichtet sind,
**dass** der ausgeleuchtete Bereich zwischen der zumindest einen Lichtquelle (82) und der zumindest einen Kameraeinheit (92) positioniert ist.

3. Vorrichtung (10) nach einem der vorstehenden Ansprüche,
**dadurch gekennzeichnet,**
**dass** die zumindest eine Kameraeinheit (92) einen ereignisbasierten Bildsensor (94) aufweist, und/oder
**dass** die zumindest eine Kameraeinheit (92) ein telezentrisches Objektiv (96) aufweist.

4. Vorrichtung (10) nach einem der vorstehenden Ansprüche,
**dadurch gekennzeichnet,**
**dass** eine Entnahmevorrichtung (60) zum Entnehmen des partikelangereicherten Fluids (200) aus dem Leitungsvolumen (22) und zum Zuführen des entnommenen partikelangereicherten Fluids (200) zur Messzelle (50) vorgesehen ist, wobei die Entnahmevorrichtung (60) eine Absaugeinheit (62) zum Erzeugen einer Druckdifferenz und/oder eine von der Leitungswandung (24) in das Leitungsvolumen (22) ragende Entnahmelanze (64) zum Auffangen des partikelangereicherten Fluids (200) aufweist.

5. Vorrichtung (10) nach einem der Ansprüche 1 bis 3,
**dadurch gekennzeichnet,**
**dass** die Messzelle (50) durch einen Messabschnitt (28) des Leitungselements (20) gebildet ist, wobei im Bereich des Messabschnitts (28) das Leitungsvolumen (22) dem Zellenvolumen (52) sowie die Leitungswandung (24) der Zellenwandung (54) entspricht.

6. Vorrichtung (10) nach Anspruch 5,
**dadurch gekennzeichnet,**
**dass** im Bereich des Messabschnitts (28) im Leitungsvolumen (22) ein Hohlraum (70) zur Aufnahme der zumindest einen Lichtquelle (82) oder der zumindest einen Kameraeinheit (92) vorgesehen ist,
wobei die zumindest eine Lichtquelle (82) im Hohlraum (70) und die zumindest eine Kameraeinheit (92) außerhalb des Leitungsvolumens (22) angeordnet sind, oder
die zumindest eine Kameraeinheit (92) im Hohlraum (70) und die zumindest eine Lichtquelle (82) außerhalb des Leitungsvolumens (22) angeordnet sind.

7. Vorrichtung (10) nach einem der vorstehenden Ansprüche,
**dadurch gekennzeichnet,**
**dass** die zumindest eine Lichtquelle (82) eine Diffusionsplatte (84) zum Homogenisieren der Ausleuchtung aufweist.

8. Vorrichtung (10) nach einem der vorstehenden Ansprüche,
**dadurch gekennzeichnet,**
**dass** das Kamerasystem (90) zwei oder mehr Kameraeinheiten (92) aufweist, wobei eine Ortsauflösung der zwei oder mehr Kameraeinheiten (92) identisch ist und Blickfelder von jeweils zwei der zwei oder mehr Kameraeinheiten (92) zumindest abschnittsweise überlappungsfrei sind.

9. Vorrichtung (10) nach einem der vorstehenden Ansprüche,
**dadurch gekennzeichnet,**
**dass** das Kamerasystem (90) zwei oder mehr Kameraeinheiten (92) aufweist, wobei eine Ortsauflösung der zwei oder mehr Kameraeinheiten (92) verschieden ist.

10. Vorrichtung (10) nach einem der vorstehenden Ansprüche 8 oder 9,
**dadurch gekennzeichnet,**
**dass** die zwei oder mehr Kameraeinheiten (92) zeitlich synchronisiert sind und/oder dass das Auswertesystem zum zeitlichen Synchronisieren der Aufnahmen der zwei oder mehr Kameraeinheiten (92) ausgebildet ist.

11. Vorrichtung (10) nach einem der vorstehenden Ansprüche,
**dadurch gekennzeichnet,**
**dass** die Auswerteeinheit (100) zum Ermitteln zumindest einer der folgenden Eigenschaften, insbesondere deren zeitlichen Verlauf, der Partikel (300) im Fluid (200) ausgebildet ist:
- Partikeldichte im Fluid (200)
- räumliche Partikelverteilung im Fluid (200)
- Partikelgrößenverteilung
- Partikelform
- Partikelgeschwindigkeit

12. Vorrichtung (10) nach einem der vorstehenden Ansprüche,
**dadurch gekennzeichnet,**
**dass** das Beleuchtungssystem (80) das Messvolumen vollständig ausleuchtet, und/oder dass das Blickfeld des Kamerasystems (90) das Messvolumen vollständig abdeckt.

13. Vorrichtung (10) nach einem der vorstehenden Ansprüche,
**dadurch gekennzeichnet,**
**dass** die Messzelle (50) vom Drallgenerator (30) entlang der Flussrichtung (400) in einem ersten Abstand (32) angeordnet ist, der einem Ein- bis Fünffachen, bevorzugt einem Dreifachen, eines Durchmessers (26) des Leitungsvolumens (22) entspricht.

14. Vorrichtung (10) nach einem der vorstehenden Ansprüche,
**dadurch gekennzeichnet,**
**dass** in Flussrichtung (400) vor dem Drallgenerator (30) ein Gleichrichter (40) zum Vermindern von Turbulenzen im Fluid (200) angeordnet ist, wobei insbesondere der Gleichrichter (40) vom Drallgenerator (30) entlang der Flussrichtung (400) in einem zweiten Abstand (42) angeordnet ist, der einem Zwei- bis Zehnfachen, bevorzugt einem Fünffachen, des Durchmessers (26) des Leitungsvolumens (22) entspricht.

15. Verfahren zum Ermitteln von Eigenschaften von Partikeln (300) in einem Fluid (200), durch eine Vorrichtung (10) nach einem der vorstehenden Ansprüche,
wobei die Vorrichtung (10) einen im Leitungselement (20) angeordneten Drallgenerator (30) aufweist, wobei durch den Drallgenerator (30) eine Verwirbelung des Fluids (200) zum Treiben der Partikel (300) in Richtung der Leitungswandung (24) und damit zum Bilden eines partikelangereicherten Fluids (200) erzeugt wird und dieses partikelangereicherte Fluid (200) mit in Richtung der Leitungswandung (24) getriebenen Partikeln (300) in Flussrichtung (400) nach dem Drallgenerator (30) einer Messzelle (50) mit einem Zellenvolumen (52) und einer, bevorzugt zumindest abschnittsweise transparenten, Zellenwandung (54) zugeführt wird, wobei ferner das Beleuchtungssystem (80) und das Kamerasystem (90) derart bezüglich der Messzelle (50) angeordnet sind, dass die Messzelle (50) durch die zumindest eine Lichtquelle (82) des Beleuchtungssystems (80) zumindest teilweise ausgeleuchtet wird und durch die zumindest eine Kameraeinheit (92) des Kamerasystems (90) Aufnahmen des ausgeleuchteten Bereichs der Messzelle (50) erstellt werden, und wobei ferner durch das Auswertesystem die Aufnahmen des Kamerasystems (90) zum Ermitteln von Eigenschaften von Partikeln (300) im Fluid (200) ausgewertet werden.

## Claims

1. An apparatus (10) for determining properties of particles (300) in a fluid (200), the apparatus (10) comprising a conduit element (20) having a conduit volume (22) enclosed by a conduit wall (24) for conducting the fluid (200) in the conduit volume (22) along a flow direction (400), an illumination system (80) having at least one light source (82), a camera system (90) having at least one camera unit (92), and an evaluation unit (100) connected to the at least one camera unit (92) in a data-communicating manner,
wherein the apparatus (10) has a vortex generator (30) arranged in the conduit element (20), wherein the vortex generator (30) is configured to generate swirl in the fluid (200) to drive the particles (300) toward the conduit wall (24) and thus to form a particle-enriched fluid (200), wherein this particle-enriched fluid (200) comprising particles (300) driven toward the conduit wall (24) can be fed in the flow direction (400) downstream of the vortex generator (30) to a measuring cell (50) having a cell volume (52) and a cell wall (54) which is preferably at least sectionally transparent,
wherein, furthermore, the illumination system (80) and the camera system (90) are arranged with respect to the measuring cell (50) such that the at least one light source (82) of the illumination system (80) is configured to at least partially illuminate the measuring cell (50) and the at least one camera unit (92) of the camera system (90) is configured to generate recordings of the illuminated region of the measuring cell (50), and wherein, furthermore, the evaluation system is configured to evaluate the recordings of the camera system (90) in order to determine properties of particles (300) in the fluid (200).

2. An apparatus (10) according to claim 1,
**characterized in that**
the at least one light source (82) and the at least one camera unit (92) are arranged and aligned relative to one another such that the illuminated region is positioned between the at least one light source (82) and the at least one camera unit (92).

3. An apparatus (10) according to one of the preceding claims,
**characterized in that**
the at least one camera unit (92) has an event-based image sensor (94),
and/or
**in that** the at least one camera unit (92) has a telecentric lens (96).

4. An apparatus (10) according to any one of the preceding claims,
**characterized in that**
a sampling device (60) is provided for sampling the particle-enriched fluid (200) from the conduit volume (22) and for feeding the sampled particle-enriched fluid (200) to the measuring cell (50), with the sampling device (60) having a suction unit (62) for generating a pressure difference and/or a sampling lance (64), which projects from the conduit wall (24) into the conduit volume (22), for collecting the particle-enriched fluid (200).

5. An apparatus (10) according to any one of the claims 1 to 3,
**characterized in that**
the measuring cell (50) is formed by a measuring section (28) of the conduit element (20), wherein, in the region of the measuring section (28), the conduit volume (22) corresponds to the cell volume (52) and the conduit wall (24) corresponds to the cell wall (54).

6. An apparatus (10) according to claim 5,
**characterized in that**,
in the region of the measuring section (28) in the conduit volume (22), a cavity (70) is provided for receiving the at least one light source (82) or the at least one camera unit (92),
wherein the at least one light source (82) is arranged in the cavity (70) and the at least one camera unit (92) is arranged outside the conduit volume (22), or
the at least one camera unit (92) is arranged in the cavity (70) and the at least one light source (82) is arranged outside the conduit volume (22).

7. An apparatus (10) according to any one of the preceding claims,
**characterized in that**
the at least one light source (82) has a diffusion plate (84) for homogenizing the illumination.

8. An apparatus (10) according to any one of the preceding claims,
**characterized in that**
the camera system (90) has two or more camera units (92), with a spatial resolution of the two or more camera units (92) being identical and fields of view of a respective two of the two or more camera units (92) being at least sectionally free of overlap.

9. An apparatus (10) according to any one of the preceding claims,
**characterized in that**
the camera system (90) has two or more camera units (92), with a spatial resolution of the two or more camera units (92) being different.

10. An apparatus (10) according to one of the preceding claims 8 or 9,
**characterized in that**
the two or more camera units (92) are temporally synchronized and/or **in that** the evaluation system is configured to temporally synchronize the recordings of the two or more camera units (92).

11. An apparatus (10) according to any one of the preceding claims,
**characterized in that**
the evaluation unit (100) is configured to determine at least one of the following properties, in particular their temporal development, of the particles (300) in the fluid (200):
- particle density in the fluid (200)
- spatial particle distribution in the fluid (200)
- particle size distribution
- particle shape
- particle velocity.

12. An apparatus (10) according to any one of the preceding claims,
**characterized in that**
the illumination system (80) fully illuminates the measuring volume, and/or **in that** the field of view of the camera system (90) fully covers the measuring volume.

13. An apparatus (10) according to any one of the preceding claims,
**characterized in that**
the measuring cell (50) is arranged at a first distance (32) from the vortex generator (30) along the flow direction (400), said first distance (32) corresponding to one to five times, preferably three times, a diameter (26) of the conduit volume (22).

14. An apparatus (10) according to any one of the preceding claims,
**characterized in that**
a rectifier (40) for reducing turbulence in the fluid (200) is arranged in the flow direction (400) upstream of the vortex generator (30), with in particular the rectifier (40) being arranged at a second distance (42) from the vortex generator (30) along the flow direction (400), said second distance (42) corresponding to two to ten times, preferably five times, the diameter (26) of the conduit volume (22).

15. A method for determining properties of particles (300) in a fluid (200) using an apparatus (10) according to any one of the preceding claims,
wherein the apparatus (10) has a vortex generator (30) arranged in the conduit element (20), wherein swirl in the fluid (200) is generated by the vortex generator (30) to drive the particles (300) toward the conduit wall (24), and thus to form a particle-enriched fluid (200), and this particle-enriched fluid (200) comprising particles (300) driven toward the conduit wall (24) is fed in the flow direction (400) downstream of the vortex generator (30) to a measuring cell (50) having a cell volume (52) and a cell wall (54) which is preferably at least sectionally transparent, wherein, furthermore, the illumination system (80) and the camera system (90) are arranged with respect to the measuring cell (50) such that the measuring cell (50) is at least partially illuminated by the at least one light source (82) of the illumination system (80) and recordings of the illuminated region of the measuring cell (50) are generated by the at least one camera unit (92) of the camera system (90), and wherein, furthermore, the recordings of the camera system (90) are evaluated by the evaluation system in order to determine properties of particles (300) in the fluid (200).

## Revendications

1. Dispositif (10) destiné à déterminer les propriétés de particules (300) présentes dans un fluide (200), le dispositif (10) comprenant un élément de conduit (20) comportant un volume de conduit (22) entouré par une paroi de conduit (24) et destiné à acheminer le fluide (200) dans le volume de conduit (22) le long d'une direction d'écoulement (400), un système d'éclairage (80) comportant au moins une source lumineuse (82), un système de caméra (90) comportant au moins une unité de caméra (92) ainsi qu'une unité d'analyse (100) reliée à ladite au moins une unité de caméra (92) par une liaison de communication de données,
le dispositif (10) comportant un générateur de tourbillon (30) disposé dans l'élément de conduit (20), le générateur de tourbillon (30) étant conçu pour générer un tourbillonnement du fluide (200) afin de propulser les particules (300) en direction de la paroi (24) du conduit et ainsi de former un fluide enrichi en particules (200), ce fluide enrichi en particules (200), contenant des particules (300) entraînées en direction de la paroi (24) du conduit, peut être acheminé dans la direction d'écoulement (400), en aval du générateur de tourbillon (30), vers une cellule de mesure (50) dotée d'un volume de cellule (52) et d'une paroi de cellule (54),
de préférence transparente au moins par sections, le système d'éclairage (80) et le système de caméra (90) étant en outre disposés par rapport à la cellule de mesure (50) de telle sorte que la au moins une source lumineuse (82) du système d'éclairage (80) éclaire au moins partiellement la cellule de mesure (50) et que la au moins une unité de caméra (92) du système de caméra (90) est conçue pour réaliser des prises de vue de la zone éclairée de la cellule de mesure (50), et dans lequel, en outre, le système d'analyse est conçu pour analyser les prises de vue du système de caméra (90) afin de déterminer les propriétés des particules (300) présentes dans le fluide (200).

2. Dispositif (10) selon la revendication 1,
**caractérisé en ce que**
la au moins une source lumineuse (82) et la au moins une unité de caméra (92) sont disposées et orientées l'une par rapport à l'autre de telle sorte que la zone éclairée soit positionnée entre la au moins une source lumineuse (82) et la au moins une unité de caméra (92).

3. Dispositif (10) selon l'une des revendications précédentes,
**caractérisé en ce que**
ladite au moins une unité de caméra (92) comporte un capteur d'image à déclenchement par événement (94), et/ou
**en ce que** ladite au moins une unité de caméra (92) comporte un objectif télécentrique (96).

4. Dispositif (10) selon l'une des revendications précédentes,
**caractérisé en ce qu'**un
dispositif de prélèvement (60) est prévu pour prélever le fluide enrichi en particules (200) du volume de conduite (22) et pour acheminer le fluide enrichi en particules prélevé (200) vers la cellule de mesure (50) ; le dispositif de prélèvement (60) comportant une unité d'aspiration (62) destinée à générer une différence de pression et/ou une lance de prélèvement (64) faisant saillie depuis la paroi de la conduite (24) dans le volume de la conduite (22) pour capter le fluide enrichi en particules (200).

5. Dispositif (10) selon l'une des revendications 1 à 3,
**caractérisé en ce que**
la cellule de mesure (50) est formée par un tronçon de mesure (28) de l'élément de conduite (20), le volume de la conduite (22) correspondant, dans la zone du tronçon de mesure (28), au volume de la cellule (52) et la paroi de la conduite (24) correspondant à la paroi de la cellule (54).

6. Dispositif (10) selon la revendication 5,
**caractérisé en ce que**,
dans la zone du tronçon de mesure (28), une cavité (70) est prévue dans le volume de conduit (22) pour recevoir la au moins une source lumineuse (82) ou la au moins une unité de caméra (92),
la au moins une source lumineuse (82) étant disposée dans la cavité (70) et la au moins une unité de caméra (92) étant disposée à l'extérieur du volume du conduit (22), ou
la au moins une unité de caméra (92) étant disposée dans la cavité (70) et la au moins une source lumineuse (82) étant disposée à l'extérieur du volume du conduit (22).

7. Dispositif (10) selon l'une des revendications précédentes,
**caractérisé en ce que**
ladite au moins une source lumineuse (82) comporte une plaque de diffusion (84) destinée à homogénéiser l'éclairage.

8. Dispositif (10) selon l'une des revendications précédentes,
**caractérisé en ce que**
le système de caméras (90) comporte deux unités de caméra (92) ou plus, la résolution spatiale de ces deux unités de caméra (92) ou plus étant identique et les champs de vision de deux de ces deux unités de caméra (92) ou plus, respectivement, ne se chevauchant pas, au moins par sections.

9. Dispositif (10) selon l'une des revendications précédentes,
**caractérisé en ce que**
le système de caméras (90) comprend deux ou plusieurs unités de caméra (92), la résolution spatiale de ces deux ou plusieurs unités de caméra (92) étant différente.

10. Dispositif (10) selon l'une des revendications 8 ou 9 ci-dessus,
**caractérisé en ce que**
les deux ou plusieurs unités de caméra (92) sont synchronisées dans le temps et/ou **en ce que** le système d'analyse est conçu pour synchroniser dans le temps les prises de vue des deux ou plusieurs unités de caméra (92).

11. Dispositif (10) selon l'une des revendications précédentes,
**caractérisé en ce que**
l'unité d'analyse (100) est conçue pour déterminer au moins l'une des propriétés suivantes, en particulier leur évolution dans le temps, des particules (300) dans le fluide (200) :
- la densité des particules dans le fluide (200)
- la répartition spatiale des particules dans le fluide (200)
- la distribution granulométrique des particules
- la forme des particules
- vitesse des particules

12. Dispositif (10) selon l'une des revendications précédentes,
**caractérisé en ce que**
le système d'éclairage (80) éclaire entièrement le volume de mesure, et/ou **en ce que** le champ de vision du système de caméra (90) couvre entièrement le volume de mesure.

13. Dispositif (10) selon l'une des revendications précédentes,
**caractérisé en ce que**
la cellule de mesure (50) est disposée en aval du générateur de tourbillon (30) le long de la direction d'écoulement (400) à une première distance (32) qui correspond à une à cinq fois, de préférence trois fois, le diamètre (26) du volume de conduit (22).

14. Dispositif (10) selon l'une des revendications précédentes,
**caractérisé en ce qu'**un
redresseur (40) destiné à réduire les turbulences dans le fluide (200) est disposé en amont du générateur de tourbillon (30) dans la direction d'écoulement (400), le redresseur (40) étant notamment disposé en amont du générateur de tourbillon (30) le long de la direction d'écoulement (400) à une deuxième distance (42) correspondant à deux à dix fois, de préférence cinq fois, le diamètre (26) du volume de conduit (22).

15. Procédé pour déterminer les propriétés de particules (300) dans un fluide (200), à l'aide d'un dispositif (10) selon l'une des revendications précédentes, le dispositif (10) comportant un générateur de tourbillon (30) disposé dans l'élément de conduit (20), le générateur de tourbillon (30) provoquant un tourbillonnement du fluide (200) afin de propulser les particules (300) en direction de la paroi (24) du conduit et ainsi de former un fluide enrichi en particules (200) et ce fluide enrichi en particules (200), contenant des particules (300) entraînées vers la paroi du conduit (24), est acheminé dans la direction d'écoulement (400) en aval du générateur de tourbillon (30) vers une cellule de mesure (50) dotée d'un volume de cellule (52) et d'une paroi de cellule (54), de préférence transparente au moins par sections, le système d'éclairage (80) et le système de caméra (90) étant en outre disposés par rapport à la cellule de mesure (50) de telle sorte que la cellule de mesure (50) soit au moins partiellement éclairée par la au moins une source lumineuse (82) du système d'éclairage (80) et que, grâce à la au moins une unité de caméra (92) du système de caméra (90) réalisent des prises de vue de la zone éclairée de la cellule de mesure (50), et dans lequel, en outre, les prises de vue du système de caméra (90) sont analysées par le système d'analyse afin de déterminer les propriétés des particules (300) présentes dans le fluide (200).
